(19)

**Europäisches Patentamt**
**European Patent Office**
**Office européen des brevets**

(11) **EP 4 647 401 A1**

(12) **EUROPEAN PATENT APPLICATION**

(43) Date of publication:
**12.11.2025 Bulletin 2025/46**

(21) Application number: **25160456.7**

(22) Date of filing: **27.02.2025**

(51) International Patent Classification (IPC):
*C01G 53/05* (2025.01)      *C01G 53/50* (2025.01)
*C01G 53/506* (2025.01)    *C01G 53/84* (2025.01)
*H01M 4/525* (2010.01)     *H01M 4/36* (2006.01)
*H01M 4/505* (2010.01)     *H01M 10/052* (2010.01)

(52) Cooperative Patent Classification (CPC):
**C01G 53/05; C01G 53/50; C01G 53/506;**
**C01G 53/84; H01M 4/36; H01M 4/366; H01M 4/485;**
**H01M 4/505; H01M 4/525; H01M 10/052;**
C01P 2002/52; C01P 2004/32; C01P 2004/51;
C01P 2004/61; C01P 2006/11;      (Cont.)

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **07.05.2024  CN 202410555844**

(71) Applicant: **CNGR Advanced Material Co., Ltd.**
**Tongren, Guizhou 554300 (CN)**

(72) Inventors:
• **YIN, Shuo**
  **TONGREN, Guizhou, 554300 (CN)**

• **YIN, Wei**
  **TONGREN, Guizhou, 554300 (CN)**
• **WANG, Yiqiao**
  **TONGREN, Guizhou, 554300 (CN)**
• **TANG, Jiajun**
  **TONGREN, Guizhou, 554300 (CN)**
• **ZHANG, Xinpeng**
  **TONGREN, Guizhou, 554300 (CN)**
• **JIANG, Yi**
  **TONGREN, Guizhou, 554300 (CN)**
• **ZHOU, Ganghuai**
  **TONGREN, Guizhou, 554300 (CN)**

(74) Representative: **Locas, Davide et al**
**Cantaluppi & Partners S.r.l.**
**Piazzetta Cappellato Pedrocchi, 18**
**35122 Padova (IT)**

(54) **A MULTI-ELEMENT DOPED POSITIVE ELECTRODE PRECURSOR AND PREPARATION METHOD THEREFOR, POSITIVE ELECTRODE MATERIAL, BATTERY AND ELECTRICAL DEVICE**

(57)    The present application provides a multi-element doped positive electrode precursor and a preparation method therefor, a positive electrode material, a battery and an electrical device, relating to the field of batteries. The multi-element doped positive electrode precursor includes N doped layers, which are a first doped layer to an $N^{th}$ doped layer respectively from inside to outside, a doping element W is doped in each doped layer, and a doping element Al is doped in the $N^{th}$ doped layer, N being a natural number greater than or equal to 2. A preparation method for the multi-element doped positive electrode precursor includes: adding a raw material including a metal salt solution, a precipitant and a complexing agent into a base solution, and performing a solution co-precipitation reaction so as to render the multi-element doped positive electrode precursor provided in the present application, the number of doping elements is increased and distributed in a gradient from inside to outside, and the multi-element doping can reduce polarization, greatly reduce volume change, and enhance thermal stability, chemical stability and cycle performance of the positive electrode material.

First layer (0-2.0μm)  :  0.5wt% W
Second layer  (2.0-3.0μm)  :  0.5wt% W、 0.5wt% Nb、 0.5wt% Mo
Third layer  (3.0-5.0μm)  :  0.5wt% W、 0.5wt% Nb、 0.5wt% Mo、 0.5wt% Zr、 0.5wt% Ti
Fourth layer  (5.0-7.5μm)  :  0.5wt% W、 0.5wt% Nb、 0.5wt% Mo、 0.5wt% Zr、 0.5wt% Ti、 0.5wt% Al

**FIG. 1**

EP 4 647 401 A1

(52) Cooperative Patent Classification (CPC): (Cont.)
    C01P 2006/12; H01M 2004/028; Y02E 60/10

**Description**

**TECHNICAL FIELD**

The present application relates to the field of batteries, and particularly to a multi-element doped positive electrode precursor and a preparation method therefor, a positive electrode material, a battery and an electrical device.

**BACKGROUND ART**

High-nickel positive electrode materials have characteristics such as a high discharge specific capacity, a low cost, and environmental friendliness. Compared with other positive electrode materials, a high-nickel positive electrode has a higher energy storage capability, and can provide a longer battery endurance time. In addition, the high-nickel positive electrode materials have a low cost, which helps to reduce a manufacturing cost of batteries. This enables the high-nickel positive electrode to become one of the most promising positive electrode materials for the next generation lithium-ion batteries. However, the high-nickel positive electrode materials currently generally have problems of a short cycle life, low thermal stability and insufficient chemical stability.

Therefore, solving the stability and safety of the high-nickel positive electrode materials is currently a research focus. Precursor performance is an important factor for determining the performance of positive electrode materials; therefore, development of satisfactory precursors is of primary significance to achieve the foregoing objective.

**SUMMARY**

The present application aims at providing a multi-element doped positive electrode precursor and a preparation method therefor, a positive electrode material, a battery and an electrical device, so as to solve the above problems.

In order to achieve the above objective, the present application adopts the following technical solutions.

A multi-element doped positive electrode precursor, where the multi-element doped positive electrode precursor includes N doped layers, which are a first doped layer to an $N^{th}$ doped layer respectively from inside to outside, a doping element W is doped in each doped layer, and a doping element Al is doped in the $N^{th}$ doped layer, N being a natural number greater than or equal to 2.

By "multi-element doped" in the present application, it means that there are two or more types of doping elements, for example, 2, 3, 4, 5, 6, 8, or 10 types.

The doped layers in the present application are divided according to the types of the doping element, where if the types of the doping elements are different, the doped layers should be divided into different doped layers.

The doping elements in the present application are relative to a principal element. An element with a higher content or more commonly used is generally referred to as the principal element, and other elements are referred to as doping elements. In certain embodiments, elements nickel, cobalt, and manganese are classified as principal elements.

In the multi-element doped positive electrode precursor of the present application, the doping element Al only exists in the $N^{th}$ layer.

Optionally, the multi-element doped positive electrode precursor meets one or more of the following conditions:

(1) doping amounts of the doping elements being each independently 1,000-15,000 ppm;
(2) the doped layers each independently having a thickness of 0.5-4.0 $\mu$m; and
(3) the doping elements in the doped layers further including one or more of Mg, Ca, Sr, Ba, Y, La, V, Nb, Ta, Cr, Mo, Zn, B, Ga, Ge, Sn, Sb, Bi, Zr, and Ti.

Optionally, the types of doping elements in the $N^{th}$ doped layer in the multi-element doped positive electrode precursor are more than types of doping elements in the other doped layers.

Optionally, the types of the doping elements in the doped layers are increased sequentially from inside to outside.

Optionally, the multi-element doped positive electrode precursor meets one or more of the following conditions:

(1) the first doped layer only including the doping element W;
(2) the doped layers including a second doped layer, and the second doped layer including one or more doping elements of Mg, Ca, Sr, Ba, Y, La, V, Nb, Ta, Cr, Mo, Zn, B, Ga, Ge, Sn, Sb, Bi, Zr, and Ti, N being a natural number greater than or equal to 3;
(3) the doped layers including a third doped layer, and the third doped layer including at least two doping elements of Mg, Ca, Sr, Ba, Y, La, V, Nb, Ta, Cr, Mo, Zn, B, Ga, Ge, Sn, Sb, Bi, Zr, and Ti, N being a natural number greater than or equal to 4;
(4) the $N^{th}$ doped layer including one or more doping elements of Mg, Ca, Sr, Ba, Y, La, V, Nb, Ta, Cr, Mo, Zn, B, Ga, Ge, Sn, Sb, Bi, Zr, and Ti; and optionally, the $N^{th}$ doped layer including all the doping elements included in the other doped layers; and

(5) the doped layers at least including the first doped layer, a second doped layer, a third doped layer and a fourth doped layer, where the first doped layer only including the doping element W, the second doped layer including doping elements W, Nb, and Mo, the third doped layer including doping elements W, Nb, Mo, Zr, and Ti, and the fourth doped layer including doping elements W, Al, Nb, Mo, Zr, and Ti; and optionally, a doping mass ratio of W, Nb, Mo, Zr, Ti, and Al in the fourth doped layer being (3-10): (2-9): (2-9): (1-8): (1-8): 1.

Optionally, the multi-element doped positive electrode precursor meets one or more of the following conditions:

A. a chemical formula of the multi-element doped positive electrode precursor being $Ni_xCo_yMn_zM_pA_m$, where $0.6 \leq x < 1$, $0 \leq y \leq 0.4$, $0 \leq z \leq 0.4$, $p \leq 0.05$, $x+y+z+p=1$, and $1 \leq m \leq 2$; A being at least one of OH, O, and $CO_3$, M including W and Al as necessary and one or more of Mg, Ca, Sr, Ba, Y, La, V, Nb, Ta, Cr, Mo, Zn, B, Ga, Ge, Sn, Sb, Bi, Zr, and Ti as optional;

B. the multi-element doped positive electrode precursor having a median particle size D50 ranging from 4 $\mu$m to 30 $\mu$m;

C. the multi-element doped positive electrode precursor having a specific surface area BET ranging from 2 $m^2$/g to 30 $m^2$/g;

D. the multi-element doped positive electrode precursor having a tap density TD ranging from 1.5 $g/cm^3$ to 3.0 $g/cm^3$;

E. the multi-element doped positive electrode precursor having sphericity ranging from 80% to 100%;

F. metal elements in the multi-element doped positive electrode precursor and average valence states thereof including: Ni positive divalent, Co positive divalent, Mn positive divalent, Al positive trivalent, Zr positive tetravalent, Ti positive tetravalent, Nb positive pentavalent, Mo positive hexavalent, and W positive hexavalent; and

G. a primary particle on a surface of the multi-element doped positive electrode precursor having a flake-shaped morphology.

The present application further provides a preparation method for the multi-element doped positive electrode precursor, including:

adding a raw material including a metal salt solution, a precipitant and a complexing agent into a base solution, and performing a solution co-precipitation reaction so as to render the multi-element doped positive electrode precursor, where the metal salt solution includes a main metal salt solution and a doping element salt solution.

Optionally, the preparation method meets one or more of the following conditions:

(1) the main metal salt solution including one or more of nickel salt, cobalt salt, and manganese salt, and a concentration of the main metal salt solution ranging from 110 g/L to 130 g/L; and/or the doping element salt solution including W and Al salt solutions and one or more of Mg, Ca, Sr, Ba, Y, La, V, Nb, Ta, Cr, Mo, Zn, B, Ga, Ge, Sn, Sb, Bi, Zr, and Ti salt solutions and/or alkaline salt solutions as optional; and/or, the precipitant including a sodium hydroxide aqueous solution and/or a sodium carbonate aqueous solution; and/or, the complexing agent including aqueous ammonia, sodium citrate and/or oxalic acid; and/or the base solution including the precipitant, the complexing agent and water;

(2) pH of the base solution ranging from 11.30 to 12.00, and/or an ammonia concentration of the base solution ranging from 3 g/L to 10 g/L;

(3) the solution co-precipitation reaction being carried out under a protective atmosphere;

(4) a temperature of the solution co-precipitation reaction ranging from 40 °C to 80°C, and/or a stirring speed of the solution co-precipitation reaction ranging from 150 r/min to 1,000 r/min;

(5) pH of the solution co-precipitation reaction ranging from 10.60 to 11.30, and/or an ammonia concentration of the solution co-precipitation reaction ranging from 3 g/L and 10 g/L;

(6) a flow rate of the main metal salt solution ranging from 1.0%/h to 5.0%/h of a volume of a reaction vessel, and/or a flow rate of the doping element salt solution ranging from 0.5%/h to 2.5%/h of the volume of the reaction vessel; and/or a flow rate of the precipitant ranging from 0.3%/h to 2.0%/h of the volume of the reaction vessel; and/or a flow rate of the complexing agent ranging from 0.01%/h to 0.10%/h of the volume of the reaction vessel; and

(7) after the solution co-precipitation reaction being ended, the method further including washing and drying a solid.

The present application further provides a positive electrode material, where a raw material thereof includes the multi-element doped positive electrode precursor; and

optionally, the positive electrode material is obtained by sintering the raw material including the multi-element doped positive electrode precursor and a lithium source.

The present application further provides a battery, including the positive electrode material.

The present application further provides an electrical device, including the battery.

Compared with the prior art, the present application has following beneficial effects.

The multi-element doped positive electrode precursor provided in the present application includes N doped layers, where each layer includes the doping element W that can inhibit an irreversible phase transition, W-O bond has larger dissociation energy, can stabilize oxygen structure, can obviously relieve structural instability, and improve cycle stability and thermal stability. Adding Al doping in the $N^{th}$ layer can stabilize the structure, and improve the cycle stability of the battery, and the Al-O bond is stronger than the Ni(Co, Mn)-O bond, and tends to improve the thermal stability; in addition, aluminum doping can enhance oxygen binding, to inhibit loss of lattice oxygen of an active material and reaction between a nickel-rich positive electrode material and ambient air, and can inhibit pulverization of secondary particles and reduce residual lithium, and enhance an electrode/electrolyte interphase, so as to improve the rate performance and cycle performance at room and high temperatures, but after the Al doping, the capacity will be obviously decreased, and thus it is only doped in the outermost layer (the $N^{th}$ doped layer).

The preparation method for the multi-element doped positive electrode precursor provided in the present application is performed by a solution co-precipitation method, and is simple in operation and stable in process.

The positive electrode material, the battery and the electrical device provided in the present application have excellent thermal stability, chemical stability and cycle performance.

## BRIEF DESCRIPTION OF DRAWINGS

In order to more clearly illustrate technical solutions of embodiments of the present application, drawings that need to be used in the embodiments will be briefly introduced below. It should be understood that the drawings merely show some embodiments of the present application, and thus should not be considered as limitation to the scope of the present application.

FIG. 1 is a schematic view of a theoretical structure of a precursor provided in Example 1;
FIG. 2 is a surface SEM picture of the precursor provided in Example 1;
FIG. 3a and FIG. 3b are diagrams of distribution of various elements of the precursor provided in Example 1;
FIG. 4a and FIG. 4b are surface SEM pictures of a positive electrode material provided in Example 1;
FIG. 5 is a surface SEM picture of a precursor provided in Comparative Example 1;
FIG. 6 is a surface SEM picture of a precursor provided in Comparative Example 2; and
FIG. 7 is a surface SEM picture of a precursor provided in Comparative Example 3.

## DETAILED DESCRIPTION OF EMBODIMENTS

In order to better illustrate technical solutions provided in the present application, before the embodiments, an overall statement is first made for the technical solutions, specifically as follows.

A multi-element doped positive electrode precursor is provided. The multi-element doped positive electrode precursor includes N doped layers, which are a first doped layer to an $N^{th}$ doped layer respectively from inside to outside, a doping element W is doped in each doped layer, and a doping element Al is doped in the $N^{th}$ doped layer, N being a natural number greater than or equal to 2.

Optionally, N can be 2, 3, 4, 5, 6, 7, 8, 9, 10 or any natural number greater than or equal to 2.

It should be noted that, the doped layer in the present application has a specific meaning as follows:

A region containing other elements than principal elements (e.g., Ni, Co, and Mn) is called as a doped region, which is then divided into different doped layers according to different types of doping elements. Along a radial direction of a secondary particle, from inside to outside, a region with the same type of doping element is a first doped layer, and if an adjacent region has different types of doping elements, it is divided as a different doped layer. The rest can be divided in the same way.

In a preferred embodiment, Al is only doped in the $N^{th}$ layer, that is, an outermost doped layer.

In an optional embodiment, the multi-element doped positive electrode precursor meets one or more of the following conditions:

(1) doping amounts of the doping elements are each independently 1,000-15,000 ppm; and
optionally, the doping amounts of the doping elements each can be independently 1,000 ppm, 2,000 ppm, 3,000 ppm, 4,000 ppm, 5,000 ppm, 6,000 ppm, 7,000 ppm, 8,000 ppm, 9,000 ppm, 10,000 ppm, 11,000 ppm, 12,000 ppm, 13,000 ppm, 14,000 ppm, 15,000 ppm or any value between 1,000 ppm and 15,000 ppm;
(2) the doped layers each independently have a thickness of 0.5-4.0 $\mu$m;

exemplarily, the first doped layer (inner core) is 0-2.0 $\mu$m, a second doped layer is 2.0-3.0 $\mu$m, a third doped layer is 3.0-5.0 $\mu$m, and a fourth doped layer is 5.0-7.5 $\mu$m; and

optionally, the doped layers each can have the thickness of 0.5 $\mu$m, 1 $\mu$m, 1.5 $\mu$m, 2 $\mu$m, 2.5 $\mu$m, 3 $\mu$m, 3.5 $\mu$m, 4 $\mu$m or any value between 0.5 $\mu$m and 4.0 $\mu$m; and

(3) the doping elements in the doped layers further include one or more of Mg, Ca, Sr, Ba, Y, La, V, Nb, Ta, Cr, Mo, Zn, B, Ga, Ge, Sn, Sb, Bi, Zr, and Ti.

In an optional embodiment, types of the doping elements in the $N^{th}$ doped layer in the multi-element doped positive electrode precursor are more than types of the doping elements in the other doped layers.

In an optional embodiment, the types of the doping elements in the doped layers are increased sequentially from inside to outside.

In an optional embodiment, the multi-element doped positive electrode precursor meets one or more of the following conditions:

(1) the first doped layer only includes the doping element W;

(2) the doped layers include a second doped layer, and the second doped layer includes one or more doping elements of Mg, Ca, Sr, Ba, Y, La, V, Nb, Ta, Cr, Mo, Zn, B, Ga, Ge, Sn, Sb, Bi, Zr, and Ti, N being a natural number greater than or equal to 3;

(3) the doped layers include a third doped layer, and the third doped layer includes at least two doping elements of Mg, Ca, Sr, Ba, Y, La, V, Nb, Ta, Cr, Mo, Zn, B, Ga, Ge, Sn, Sb, Bi, Zr, and Ti, N being a natural number greater than or equal to 4;

(4) the $N^{th}$ doped layer includes one or more doping elements of Mg, Ca, Sr, Ba, Y, La, V, Nb, Ta, Cr, Mo, Zn, B, Ga, Ge, Sn, Sb, Bi, Zr, and Ti; and optionally, the $N^{th}$ doped layer includes all the doping elements included in the other doped layers; and

(5) the doped layers at least include the first doped layer, a second doped layer, a third doped layer and a fourth doped layer, where the first doped layer only includes the doping element W, the second doped layer includes doping elements W, Nb, and Mo, the third doped layer includes doping elements W, Nb, Mo, Zr, and Ti, and the fourth doped layer includes doping elements W, Al, Nb, Mo, Zr, and Ti; and optionally, a doping mass ratio of W, Nb, Mo, Zr, Ti, and Al in the fourth doped layer is (3-10): (2-9): (2-9): (1-8): (1-8): 1.

Metal ions of different valence states are introduced into lattices, such as $K^+$, $Mg^{2+}$, $Al^{3+}$, $Zr^{4+}$, and $Ti^{4+}$, which can occupy different positions and improve structural stability. For example, $W^{6+}$ will inhibit an irreversible phase transition, and compared with TM-O bond, W-O bond has larger dissociation energy, so that oxygen around W is stabilized, and structural instability can be obviously relieved, thus improving cycle stability and thermal stability. A larger ionic radius of $Zr^{4+}$ enlarges unit cell parameters of the positive electrode material, and facilitates diffusion of lithium ions. $Zr^{4+}$ keeps a valence state unchanged and serves as an interlayer pillar, and at the same time, a stronger Zr-O bond ($776.1\pm13.4$ kJ/mol) and $Ni^{4+}$ generate strong electrostatic repulsion therebetween, reduce lattice oxygen release, and stabilize the structure of the positive electrode material. Based on crystal-field theory calculation, doping of $Nb^{5+}$ and $Mo^{6+}$ with d orbital electron count 0 tends to occupy tetrahedral vacancies, hinder migration of $Ni^{2+}$ towards $Li^+$ vacancies, and inhibit transition of smectic phase to halite phase in a cycle process and a thermal failure process, thus improving electrochemical stability and thermal safety of the high-nickel positive electrode. $Ti^{4+}$ is doped on a surface of the high-nickel positive electrode material, and the $Ti^{4+}$ doping reduces $Ni^{3+}$ on a particle surface to $Ni^{2+}$, and meanwhile $Ni^{2+}$ is more easy to migrate to Li site, to form a cationic mixed layered structure on the particle surface, thus improving reversibility of H2-H3 phase transition, that is, the layered structure in a highly delithiated state is stabilized by Ti ion doping, so that the material has high capacity and cycle performance, and improvement on the reversibility of the H2-H3 phase transition enables the phase H3 to repeatedly appear during cycling of the material, and maintains a high capacity of the material; the reversible H2-H3 phase transition enables the material to have an excellent cycle performance. $Al^{3+}$ has a radius close to that of $Co^{3+}$, presents electrochemical inertness, can stably form a bond with surrounding $O^{2-}$ even under a high voltage, plays a role in stabilizing the structure, and can improve cycle stability of a battery. An Al-O bond is stronger than a Ni(Co, Mn)-O bond, and tends to improve the thermal stability. In addition, aluminum doping can enhance oxygen binding, to inhibit loss of lattice oxygen of an active material and reaction of a nickel-rich positive electrode material with ambient air, and can inhibit pulverization of secondary particles and reduce residual lithium, and enhance an electrode/electrolyte interphase, so as to improve rate performance and cycle performance at room and high temperatures. However, after the Al doping, the Ni-O bond has a reduced length, and increased bond energy, so that dissolution and diffusion of metal ions in a Li layer and an electrolytic solution are inhibited. When an Al dopant is introduced, Li vacancies will appear, resulting in a decrease in capacity.

High-entropy doping (doping elements $\geq 5$ types) can enhance stability of the material and improve performance of the battery. Through the high-entropy doping, a variety of elements (e.g., $Mg^{2+}$, $Al^{3+}$, $Y^{3+}$, $Zr^{4+}$, $Ti^{4+}$, $Nb^{5+}$, $W^{6+}$, and

$Mo^{6+}$) can be introduced to improve the stability of the material, that is, by reducing a volume change of the material (the volume changes less as the doping element increases), formation of cracks caused by lattice defects and local strain is reduced, so as to improve the thermal stability and chemical stability of the material. In addition, the high-entropy doping can also improve electrical conductivity and ion diffusion performance of the material, and improve energy density and cycle life of the battery. However, with the introduction of numerous doping elements, an initial capacity of the high-nickel positive electrode is significantly reduced as compared with that without doping.

Therefore, the present application designs a multi-element doped structure, which can maintain the advantages of enhancing the thermal stability, chemical stability and cycle performance of the positive electrode material by multi-element doping, and can also reduce capacity loss brought about by introduction of doping elements.

In the solution (5) in the above, on the basis of the first doped layer, the second doped layer is additionally doped with Nb and Mo, where Nb and Mo tend to occupy tetrahedral vacancies, hinder migration of $Ni^{2+}$ towards $Li^+$ vacancies, inhibit transition of smectic phase to halite phase in a cycle process and a thermal failure process, thus improving electrochemical stability and thermal safety of the high-nickel positive electrode; on the basis of the second doped layer, the third doped layer is additionally doped with Zr and Ti, where $Zr^{4+}$ keeps a valence state unchanged and serves as an interlayer pillar, at the same time, a stronger Zr-O bond (776.1±13.4 kJ/mol) and $Ni^{4+}$ generate strong electrostatic repulsion therebetween, reduce lattice oxygen release, and stabilize the structure of the positive electrode material; $Ti^{4+}$ doping can stabilize a layered structure in a highly delithiated state, so that the material has high capacity and cycle performance, and improvement on the reversibility of the H2-H3 phase transition enables the phase H3 to appear repeatedly in the cycling process of the material, and maintains the high capacity and excellent cycle performance of the material; on the basis of the third doped layer, the fourth doped layer is additionally doped with $Al^{3+}$, can stabilize the structure, and improves the cycle stability of the battery, and the Al-O bond is stronger than the Ni(Co, Mn)-O bond, and tends to improve the thermal stability; in addition, aluminum doping can enhance oxygen binding, to inhibit loss of lattice oxygen of an active material and reaction between a nickel-rich positive electrode material and ambient air, and can inhibit pulverization of secondary particles and reduce residual lithium, and enhance an electrode/electrolyte interphase, so as to improve the rate performance and cycle performance at room and high temperatures, but after the Al doping, the capacity will be obviously decreased, and thus it is only doped in the outermost layer.

The third doped layer and the fourth doped layer, both with high-entropy doping, reduce polarization, and enhance the thermal stability, chemical stability and cycle performance of the positive electrode material. Gradient increase and distribution of the number of doping elements can reduce the loss of capacity brought about by the introduction of the doping elements, and at the same time, the interior is of a loose structure, which can alleviate influence of a large volume change caused by a small amount of doping elements.

In an optional embodiment, the precursor has characteristics of high-entropy doping of the outermost layer and radial gradient increase and distribution of elements (from inside to outside). The outermost layer is in sufficient contact with the electrolytic solution, and is most likely to undergo side reactions, so that a high-entropy structure of the outermost layer can greatly reduce the side reactions and improve the cycle performance; the high-entropy doping can greatly reduce the volume change, and can enhance the thermal stability and chemical stability of the material; and gradient increase and distribution (from inside to outside) of the number of doping elements can reduce the loss of capacity brought about after introduction of the doping elements.

Optionally, the doping mass ratio of W, Nb, Mo, Zr, Ti, and Al in the fourth doped layer can be 3:2:2:1:1:1, 5:5:5:4:4:1, 10:9:9:8:8:1 or any value within (3-10):(2-9):(1-8):(1-8):1.

In an optional embodiment, the multi-element doped positive electrode precursor meets one or more of the following conditions:

A. a chemical formula of the multi-element doped positive electrode precursor is $Ni_xCo_yMn_zM_pA_m$, where $0.6 \leq x < 1$, $0 \leq y \leq 0.4$, $0 \leq z \leq 0.4$, $p \leq 0.05$, $x+y+z+p=1$, and $1 \leq m \leq 2$; A is at least one of OH, O, and $CO_3$, M includes W and Al as necessary and one or more of Mg, Ca, Sr, Ba, Y, La, V, Nb, Ta, Cr, Mo, Zn, B, Ga, Ge, Sn, Sb, Bi, Zr and Ti as optional; and

optionally, x can be 0.6, 0.61, 0.62, 0.63, 0.64, 0.65, 0.66, 0.67, 0.68, 0.69, 0.7, 0.71, 0.72, 0.73, 0.74, 0.75, 0.76, 0.77, 0.78, 0.79, 0.8, 0.81, 0.82, 0.83, 0.84, 0.85, 0.86, 0.87, 0.88, 0.89, 0.9, 0.91, 0.92, 0.93, 0.94, 0.95, 0.96, 0.97, 0.98, 0.99, 1 or any value between 0.6 and 1; y can be 0, 0.01, 0.02, 0.03, 0.04, 0.05, 0.06, 0.07, 0.08, 0.09, 0.1, 0.11, 0.12, 0.13, 0.14, 0.15, 0.16, 0.17, 0.18, 0.19, 0.2, 0.21, 0.22, 0.23, 0.24, 0.25, 0.26, 0.27, 0.28, 0.29, 0.3, 0.31, 0.32, 0.33, 0.34, 0.35, 0.36, 0.37, 0.38, 0.39, 0.4 or any value between 0 and 0.4; z can be 0, 0.01, 0.02, 0.03, 0.04, 0.05, 0.06, 0.07, 0.08, 0.09, 0.1, 0.11, 0.12, 0.13, 0.14, 0.15, 0.16, 0.17, 0.18, 0.19, 0.2, 0.21, 0.22, 0.23, 0.24, 0.25, 0.26, 0.27, 0.28, 0.29, 0.3, 0.31, 0.32, 0.33, 0.34, 0.35, 0.36, 0.37, 0.38, 0.39, 0.4 or any value between 0 and 0.4; and p can be 0, 0.01, 0.02, 0.03, 0.04, 0.05 or any value less than or equal to 0.05;

B. the multi-element doped positive electrode precursor has a median particle size D50 ranging from 4 μm to 30 μm; and

optionally, the median particle size D50 of the multi-element doped positive electrode precursor can be 4 μm, 5 μm, 6

$\mu$m, 7 $\mu$m, 8 $\mu$m, 9 $\mu$m, 10 $\mu$m, 11 $\mu$m, 12 $\mu$m, 13 $\mu$m, 14 $\mu$m, 15 $\mu$m, 16 $\mu$m, 17 $\mu$m, 18 $\mu$m, 19 $\mu$m, 20 $\mu$m, 21 $\mu$m, 22 $\mu$m, 23 $\mu$m, 24 $\mu$m, 25 $\mu$m, 26 $\mu$m, 27 $\mu$m, 28 $\mu$m, 29 $\mu$m, 30 $\mu$m or any value between 4 $\mu$m and 30 $\mu$m;

C. the multi-element doped positive electrode precursor has a specific surface area BET ranging from 2 $m^2$/g to 30 $m^2$/g; and

optionally, the specific surface area BET of the multi-element doped positive electrode precursor can be 2 $m^2$/g, 3 $m^2$/g, 4 $m^2$/g, 5 $m^2$/g, 6 $m^2$/g, 7 $m^2$/g, 8 $m^2$/g, 9 $m^2$/g, 10 $m^2$/g, 11 $m^2$/g, 12 $m^2$/g, 13 $m^2$/g, 14 $m^2$/g, 15 $m^2$/g, 16 $m^2$/g, 17 $m^2$/g, 18 $m^2$/g, 19 $m^2$/g, 20 $m^2$/g, 21 $m^2$/g, 22 $m^2$/g, 23 $m^2$/g, 24 $m^2$/g, 25 $m^2$/g, 26 $m^2$/g, 27 $m^2$/g, 28 $m^2$/g, 29 $m^2$/g, 30 $m^2$/g or any value between 2 $m^2$/g and 30 $m^2$/g;

D. the multi-element doped positive electrode precursor has a tap density TD ranging from 1.5 $g/cm^3$ to 3.0 $g/cm^3$; and

optionally, the tap density TD of the multi-element doped positive electrode precursor can be 1.5 $g/cm^3$, 1.6 $g/cm^3$, 1.7 $g/cm^3$, 1.8 $g/cm^3$, 1.9 $g/cm^3$, 2.0 $g/cm^3$, 2.1 $g/cm^3$, 2.2 $g/cm^3$, 2.3 $g/cm^3$, 2.4 $g/cm^3$, 2.5 $g/cm^3$, 2.6 $g/cm^3$, 2.7 $g/cm^3$, 2.8 $g/cm^3$, 2.9 $g/cm^3$, 3.0 $g/cm^3$ or any value between 1.5 $g/cm^3$ and 3.0 $g/cm^3$;

E. the multi-element doped positive electrode precursor has sphericity ranging from 80% to 100%; and

optionally, the sphericity of the multi-element doped positive electrode precursor can be 80%, 81%, 82%, 83%, 84%, 85%, 86%, 87%, 88%, 89%, 90%, 91%, 92%, 93%, 94%, 95%, 96%, 97%, 98%, 99%, 100% or any value between 80% and 100%;

F. average valence states of metals of the multi-element doped positive electrode precursor include: Ni positive divalent, Co positive divalent, Mn positive divalent, Al positive trivalent, Zr positive tetravalent, Ti positive tetravalent, Nb positive pentavalent, Mo positive hexavalent, and W positive hexavalent; and

G. primary particles on a surface of the multi-element doped positive electrode precursor have a flake-shaped morphology.

The present application further provides a preparation method for the multi-element doped positive electrode precursor, including:

adding a raw material including a metal salt solution, a precipitant and a complexing agent into a base solution, and performing a solution co-precipitation reaction so as to render the multi-element doped positive electrode precursor, where the metal salt solution includes a main metal salt solution and a doping element salt solution.

In an optional embodiment, the preparation method meets one or more of the following conditions:

(1) the main metal salt solution includes one or more of nickel salt, cobalt salt, and manganese salt, and a total mass concentration of the main metal salt solution ranges from 110 g/L to 130 g/L; and/or the doping element salt solution includes W and Al salt solutions and one or more of Mg, Ca, Sr, Ba, Y, La, V, Nb, Ta, Cr, Mo, Zn, B, Ga, Ge, Sn, Sb, Bi, Zr, and Ti salt solutions and/or alkaline salt solutions as optional; and/or, the precipitant includes a sodium hydroxide aqueous solution and/or a sodium carbonate aqueous solution; and/or, the complexing agent includes aqueous ammonia, sodium citrate and/or oxalic acid; and/or the base solution includes the precipitant, the complexing agent and water, wherein to facilitate calculation and experimental design, the concentrations of the main metal salt solution and the doping element salt solution are calculated based on the mass of the target element; and

optionally, the total mass concentration of the main metal salt solution can be 110 g/L, 120 g/L, 130 g/L or any value between 110 g/L and 130 g/L;

(2) pH of the base solution ranges from 11.30 to 12.00, and/or an ammonia concentration of the base solution ranges from 3 g/L to 10 g/L; and

optionally, the pH of the base solution can be 11.30, 11.40, 11.50, 11.60, 11.70, 11.80, 11.90, 12.00 or any value between 11.30 and 12.00; and the ammonia concentration of the base solution can be 3 g/L, 4 g/L, 5 g/L, 6 g/L, 7 g/L, 8 g/L, 9 g/L, 10 g/L or any value between 3 g/L and 10 g/L;

(3) the solution co-precipitation reaction is carried out under a protective atmosphere;

(4) a temperature of the solution co-precipitation reaction ranges from 40 °C to 80°C, and/or a stirring speed of the solution co-precipitation reaction ranges from 150 r/min to 1,000 r/min; and

optionally, the temperature of the solution co-precipitation reaction can be 40 °C, 50 °C, 60 °C, 70 °C, 80 °C or any value between 40 °C and 80 °C;

(5) pH of the solution co-precipitation reaction ranges from 10.60 to 11.30, and/or an ammonia concentration of the solution co-precipitation reaction ranges from 3 g/L and 10 g/L; and

optionally, the pH of the solution co-precipitation reaction can be 10.60, 10.70, 10.80, 10.90, 11.00, 11.10, 11.20, 11.30 or any value between 10.60 and 11.30; and the ammonia concentration of the solution co-precipitation reaction can be 3 g/L, 4 g/L, 5 g/L, 6 g/L, 7 g/L, 8 g/L, 9 g/L, 10 g/L or any value between 3 g/L and 10 g/L;

(6) a flow rate of the main metal salt solution ranges from 1.0%/h to 5.0%/h of a volume of a reaction vessel, and/or a flow rate of the doping element salt solution ranges from 0.5%/h to 2.5%/h of the volume of the reaction vessel; and/or a flow rate of the precipitant ranges from 0.3%/h to 2.0%/h of the volume of the reaction vessel; and/or a flow rate of the complexing agent ranges from 0.01%/h to 0.10%/h of the volume of the reaction vessel;

optionally, the flow rate of the main metal salt solution can be 1.0%/h, 1.5%/h, 2.0%/h, 2.5%/h, 3.0%/h, 3.5%/h, 4.0%/h, 4.5%/h, 5.0%/h or any value between 1.0%/h and 5.0%/h of the volume of the reaction vessel; the flow rate of the doping element salt solution is 0.5%/h, 1.0%/h, 1.5%/h, 2.0%/h, 2.5%/h or any value between 0.5%/h and 2.5%/h of the volume of the reaction vessel; the flow rate of the precipitant is 0.3%/h, 0.5%/h, 1.0%/h, 1.5%/h, 2.0%/h or any value between 0.3%/h and 2.0%/h of the volume of the reaction vessel; the flow rate of the complexing agent is 0.01%/h, 0.02%/h, 0.03%/h, 0.04%/h, 0.05%/h, 0.06%/h, 0.07%/h, 0.08%/h, 0.09%/h, 0.10%/h or any value between 0.01%/h and 0.10%/h of the volume of the reaction vessel; and

optionally, the flow rate of the doping element salt solution is adjusted according to a particle size of particulates; and

(7) after the solution co-precipitation reaction is ended, the method further includes washing and drying a solid.

The present application further provides a positive electrode material, a raw material of which includes the multi-element doped positive electrode precursor.

In an optional embodiment, the positive electrode material is obtained by sintering the raw material including the multi-element doped positive electrode precursor and a lithium source.

The present application further provides a battery, including the positive electrode material.

The present application further provides an electrical device, including the battery.

It should be noted that, the electrical device mentioned in the present application refers to a device including the above battery provided in the present application or a device directly/indirectly powered by the battery provided in the present application. Exemplarily, the electrical device can be, for example, an electric automobile, an electric bicycle, an electronic device, or an energy storage device.

The embodiments of the present application will be described in detail below in conjunction with specific examples, while those skilled in the art would understand that the following examples are merely used to illustrate the present application, but should not be considered as limitation to the scope of the present application. Examples, for which no concrete conditions are specified, are carried out according to conventional conditions or conditions recommended by manufactures. Where manufacturers of reagents or instruments used are not specified, they are conventional products commercially available.

Example 1

The present example provided a lithium-ion battery ternary positive electrode material precursor with gradient doping of multiple elements tungsten, niobium, molybdenum, zirconium, titanium, and aluminum. Secondary particles of the precursor material were spherical, had a median particle size D50 of 6.667 $\mu$m, and included four doped layers, where a first doped layer included only a doping element W, a second doped layer included doping elements W, Nb, and Mo, a third doped layer included doping elements W, Nb, Mo, Zr and Ti, and a fourth doped layer included doping elements W, Nb, Mo, Zr, Ti and Al. According to theoretical calculations of the preparation method, in this precursor, a mass of W was 0.50% of a total mass of the precursor, a mass of Nb was 0.49% of the total mass of the precursor, a mass of Mo was 0.49% of the total mass of the precursor, a mass of Zr was 0.47% of the total mass of the precursor, a mass of Ti was 0.47% of the total mass of the precursor, and a mass of Al was 0.35% of the total mass of the precursor. Primary particles on a surface of the precursor material were stacked and distributed in a flake shape, and the secondary particles had sphericity of 92.3%, a specific surface area of 19.52 m$^2$/g, and a tap density of 1.92 g/cm$^3$.

A preparation method for the lithium-ion battery ternary positive electrode material precursor with gradient doping of multiple elements tungsten, niobium, molybdenum, zirconium, titanium, and aluminum of the present example specifically included the following steps:

(1) formulating an appropriate amount of 120 g/L nickel sulfate solution, 120 g/L cobalt sulfate solution, 120 g/L manganese sulfate solution, 1.91 g/L sodium tungstate solution, 1.91 g/L niobium oxalate solution, 1.91 g/L sodium molybdate solution, 1.91 g/L zirconium sulfate solution, 1.91 g/L titanyl sulfate solution and 1.91 g/L sodium meta-aluminate solution; and mixing and stirring uniformly the nickel sulfate solution, cobalt sulfate solution, manganese sulfate solution and pure water, to formulate a main metal salt solution according to a molar ratio of Ni: Co: Mn = 96:3:1, a sum of mass concentrations of nickel, cobalt and manganese ions being 120 g/L;

(2) into a reaction kettle, adding pure water, a sodium hydroxide solution (with a mass percentage concentration of 32.5%), and an aqueous ammonia solution (with a mass percentage concentration of 20.5%), and introducing nitrogen as a protective gas, where a reaction temperature was 70 °C, a rotational speed of the reaction was 600 r/min, and conditions of a base solution were adjusted to pH 11.45 and an ammonia concentration of 6.5 g/L;

(3) feeding materials into the reaction kettle by pumping according to set flow rates, introducing the main metal salt solution (a flow rate was 2.0%/h of a volume of the reaction kettle), a doping element salt solution(s) (a flow rate was 1.0%/h of the volume of the reaction kettle), a sodium hydroxide solution (a flow rate was 0.78%/h of the volume of the reaction kettle) and aqueous ammonia (a flow rate was 0.032%/h of the volume of the reaction kettle), and performing a co-precipitation reaction, where a stirring rotational speed in a reaction process was adjusted to be 200 r/min, a pH value in the reaction process was controlled to be 11.20, and an ammonia concentration was 8.5 g/L;

(4) increasing the doping element salt solutions according to a particle size in a process (0-2.0 $\mu$m: 0.5 wt% W solution; 2.0-3.0 $\mu$m: 0.5 wt% W solution, 0.5 wt% Mo solution, and 0.5 wt% Nb solution; 3.0-5.0 $\mu$m: 0.5 wt% W solution, 0.5 wt% Mo solution, 0.5 wt% Nb solution, 0.5 wt% Zr solution, and 0.5 wt% Ti solution; 5.0-7.5 $\mu$m (reaction was ended): 0.5 wt% W, 0.5 wt% Mo solution, 0.5 wt% Nb solution, 0.5 wt% Zr solution, 0.5 wt% Ti solution, and 0.5 wt% Al solution), where the particle size was detected every 2 h, and when approaching the particle size at which the solution needed to be switched, frequency of detecting the particle size was changed to every 1 h; after the doping element salt solutions were all introduced (that is, after the particle size reached 5 $\mu$m), reaction was further carried out until particles with satisfactory D50 were obtained, a precursor slurry was filtered and washed, and a filter cake was dried, sieved, and demagnetized so as to render the precursor.

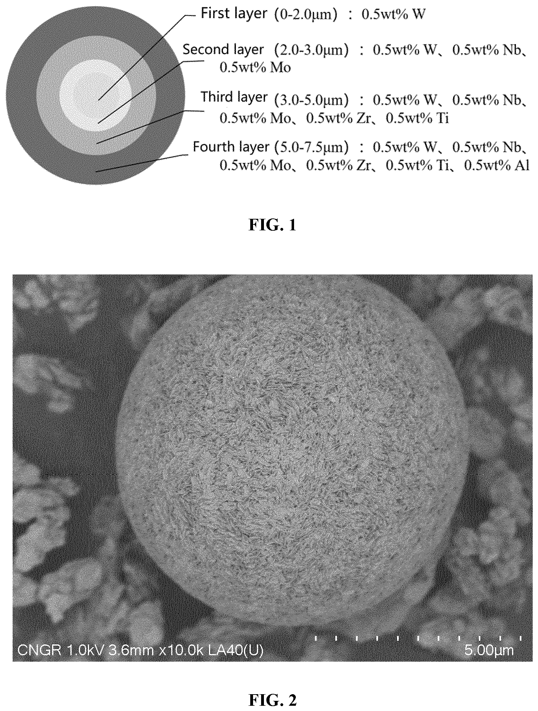

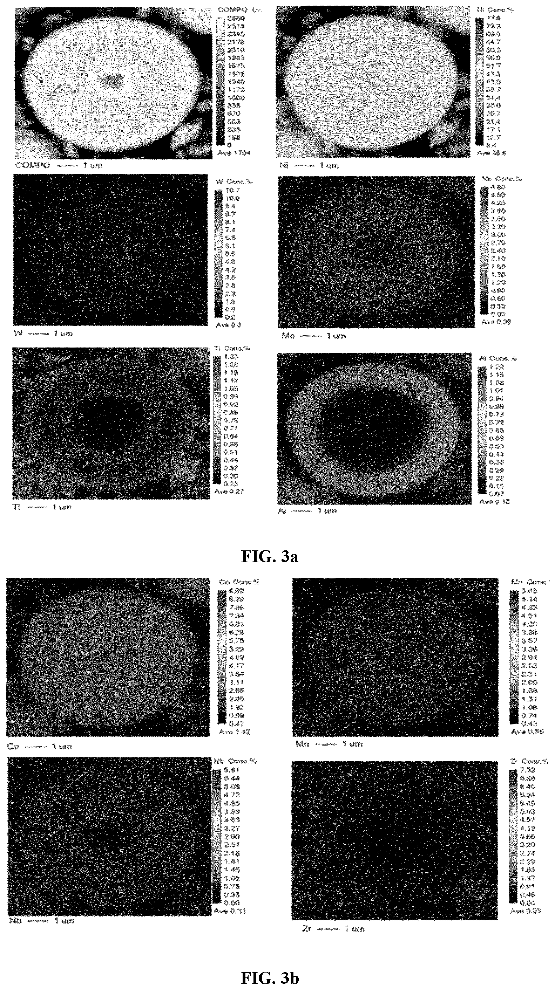

A schematic view of a theoretical structure of the precursor is as shown in FIG. 1, a surface SEM picture of the precursor obtained is as shown in FIG. 2, and diagrams of element distribution of the precursor obtained are as shown in FIG. 3a and FIG. 3b.

The present example further provided a positive electrode material for a lithium-ion battery and a battery, and a preparation method therefor was as follows:

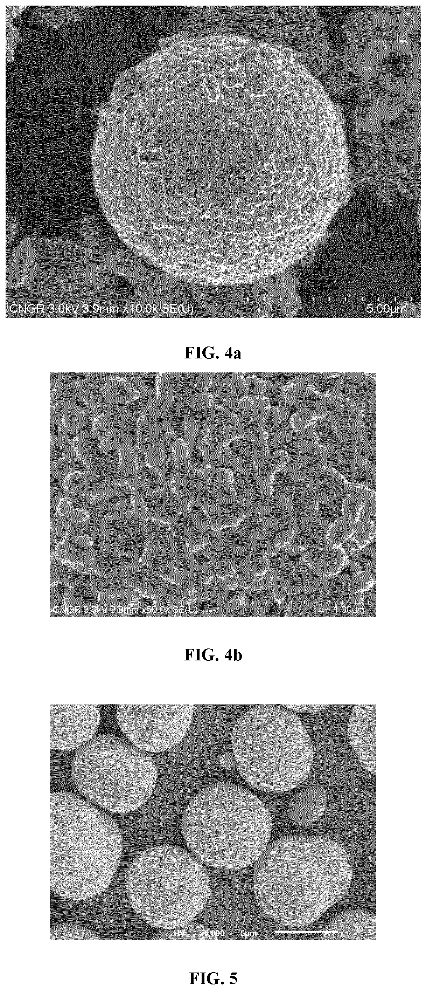

(1) preparation of the positive electrode material: uniformly mixing 2,000 g of the precursor prepared in the Example and LiOH by a high-speed mixer according to a molar ratio of 1:1.03, performing sintering using a box furnace under an oxygen atmosphere, slowly heating to a temperature of 500 °C and holding for 4 h, slowly heating to a temperature of 730 °C, performing high-temperature sintering for 12 h, cooling to a room temperature, and then performing a vibration sieving treatment, so as to render a nickel-cobalt-manganese ternary positive electrode material.
Surface SEM pictures of the obtained ternary positive electrode material are as shown in FIG. 4a and FIG. 4b, where FIG. 4b is a partial enlarged view of FIG. 4a.
(2) Preparation of the battery: electrochemical performance test was performed on button half-battery: formulating the above positive electrode material, conductive carbon black, and a binder PVDF (polyvinylidene fluoride) into a slurry according to 92:5:3, and uniformly coating the slurry on an aluminum foil so as to prepare a positive electrode plate, using a metal lithium plate as a negative electrode plate, 1 mol/L LiPF6/EC:DMC (with volume ratio 1:1) as an electrolytic solution, and assembling a battery shell, the positive electrode plate, the negative electrode plate, a separator, an elastic sheet and a gasket into a button battery in a vacuum glove box.
(3) The positive electrode material was assembled into the button battery, and the electrochemical performance test was performed using a LAND test system. A test voltage ranged from 3.00 V to 4.30V, and 1 C = 210 mAh/g.

Positive electrode materials in the following Examples and Comparative Examples used the same preparation method and test method.

## Example 2

The present example provided a lithium-ion battery ternary positive electrode material precursor with gradient doping of multiple elements tungsten, niobium, molybdenum, zirconium, titanium, and aluminum. Secondary particles of the precursor material were spherical, had a median particle size D50 of 6.829 $\mu$m, and included three doped layers, where a first doped layer included only a doping element W, a second doped layer included doping elements W, Nb, Mo, Zr and Ti, and a third doped layer included doping elements W, Nb, Mo, Zr, Ti and Al. According to theoretical calculations of the preparation method, in this precursor, a mass of W was 0.50% of a total mass of the precursor, a mass of Nb was 0.49% of the total mass of the precursor, a mass of Mo was 0.49% of the total mass of the precursor, a mass of Zr was 0.49% of the total mass of the precursor, a mass of Ti was 0.49% of the total mass of the precursor, and a mass of Al was 0.35% of the total mass of the precursor. Primary particles on a surface of the precursor material were stacked and distributed in a flake shape, and the secondary particles had sphericity of 92.1%, a specific surface area of 18.70 m$^2$/g, and a tap density of 1.95 g/cm$^3$.

A preparation method for the lithium-ion battery ternary positive electrode material precursor with gradient doping of multiple elements tungsten, niobium, molybdenum, zirconium, titanium, and aluminum of the present example specifically included the following steps:

formulating an appropriate amount of 120 g/L nickel sulfate solution, 120 g/L cobalt sulfate solution, 120 g/L manganese sulfate solution, 1.91 g/L sodium tungstate solution, 1.91 g/L niobium oxalate solution, 1.91 g/L sodium molybdate solution, 1.91 g/L zirconium sulfate solution, 1.91 g/L titanyl sulfate solution and 1.91 g/L sodium meta-aluminate solution; and mixing and stirring uniformly the nickel sulfate solution, cobalt sulfate solution, manganese sulfate solution and pure water, to formulate a main metal salt solution according to a molar ratio of Ni: Co: Mn = 96:3:1, a sum of mass concentrations of nickel, cobalt and manganese ions being 120 g/L;

into a reaction kettle, adding pure water, a sodium hydroxide solution (with a mass percentage concentration of 32.5%), and an aqueous ammonia solution (with a mass percentage concentration of 20.5%), and introducing nitrogen as a protective gas, where a reaction temperature was 70 °C, a rotational speed of the reaction was 600 r/min, and conditions of a base solution were adjusted to pH 11.85 and an ammonia concentration of 6.5 g/L;

feeding materials into the reaction kettle by pumping according to set flow rates, introducing the main metal salt solution (a flow rate was 2.0%/h of a volume of the reaction kettle), a doping element salt solution(s) (a flow rate was 1.0%/h of the volume of the reaction kettle), a sodium hydroxide solution (a flow rate was 0.78%/h of the volume of the reaction kettle) and aqueous ammonia (a flow rate was 0.032%/h of the volume of the reaction kettle), and performing a co-precipitation reaction, where a stirring rotational speed in a reaction process was adjusted to be 200 r/min, a pH value in the reaction process was controlled to be 10.80, and an ammonia concentration was 8.5 g/L;

increasing the doping element salt solutions according to a particle size in a process (0-2.0 $\mu$m: 0.5 wt% W solution; 2.0-5.0 $\mu$m: 0.5 wt% W solution, 0.5 wt% Mo solution, 0.5 wt% Nb solution, 0.5 wt% Zr solution, and 0.5 wt% Ti solution; 5.0-7.5 $\mu$m (reaction was ended): 0.5 wt% W solution, 0.5 wt% Mo solution, 0.5 wt% Nb solution, 0.5 wt% Zr solution, 0.5 wt% Ti solution, and 0.5 wt% Al solution), where the particle size was detected every 2 h, and when approaching the particle size at which the solution needed to be switched, frequency of detecting the particle size was changed to every 1 h; after the doping element salt solutions were all introduced (that is, after the particle size reached 5 $\mu$m), reaction was further carried out until particles with satisfactory D50 were obtained, a precursor slurry was filtered and washed, and a filter cake was dried, sieved, and demagnetized so as to render the precursor.

**Example 3**

The present example provided a lithium-ion battery ternary positive electrode material precursor with gradient doping of tungsten and aluminum. Secondary particles of the precursor material were spherical, had a median particle size D50 of 7.952 $\mu$m, and included two doped layers, where a first doped layer included only a doping element W, and a second doped layer included doping elements W and Al. According to theoretical calculations of the preparation method, in this precursor, a mass of W was 0.50% of a total mass of the precursor, and a mass of Al was 0.35% of the total mass of the precursor. Primary particles on a surface of the precursor material were tightly arranged in a fine needle shape, and the secondary particles had good sphericity of 92.7%, a specific surface area of 20.86 m$^2$/g, and a tap density of 1.77 g/cm$^3$.

A preparation method for the lithium-ion battery ternary positive electrode material precursor with gradient doping of tungsten and aluminum of the present example specifically included the following steps:

formulating an appropriate amount of 120 g/L nickel sulfate solution, 120 g/L cobalt sulfate solution, 120 g/L manganese sulfate solution, 1.91 g/L sodium tungstate solution and 1.91 g/L sodium meta-aluminate solution; and mixing and stirring uniformly the nickel sulfate solution, cobalt sulfate solution, manganese sulfate solution and pure water, to formulate a main metal salt solution according to a molar ratio of Ni: Co: Mn = 96:3:1, a sum of mass concentrations of nickel, cobalt, and manganese ions being 120 g/L;

into a reaction kettle, adding pure water, a sodium hydroxide solution (with a mass percentage concentration of 32.5%), and an aqueous ammonia solution (with a mass percentage concentration of 20.5%), and introducing nitrogen as a protective gas, where a reaction temperature was 60 °C, a rotational speed of the reaction was 300 r/min, and conditions of a base solution were adjusted to pH 11.65 and an ammonia concentration of 3.5 g/L;

feeding materials into the reaction kettle by pumping according to set flow rates, introducing the main metal salt solution (a flow rate was 2.0%/h of a volume of the reaction kettle), a doping element salt solution(s) (a flow rate was 1.0%/h of the volume of the reaction kettle), a sodium hydroxide solution (a flow rate was 0.78%/h of the volume of the reaction kettle) and aqueous ammonia (a flow rate was 0.032%/h of the volume of the reaction kettle), and performing a co-precipitation reaction, where a stirring rotational speed in a reaction process was adjusted to be 300 r/min, a pH value in the reaction process was controlled to be 11.00, and an ammonia concentration was 5.5 g/L; and

increasing the doping element salt solutions according to a particle size in a process (0-5.0 $\mu$m: 0.5 wt% W solution; 5.0-7.5 $\mu$m (reaction was ended): 0.5 wt% W solution and 0.5 wt% Al solution), where the particle size was detected every 2 h, and when approaching the particle size at which the solution needed to be switched, frequency of detecting the particle size was changed to every 1 h; after the doping element salt solutions were all introduced (that is, after the particle size reached 5 $\mu$m), reaction was further carried out until particles with satisfactory D50 were obtained, a precursor slurry was filtered and washed, and a filter cake was dried, sieved, and demagnetized so as to render the precursor.

Exemplarily, the theoretical calculation process of the mass ratio of W and Al in the precursor of the present example is as follows:

During the preparation process, the mass fraction of W in the first doping layer is 0.5wt% and the mass fraction of W in the second doping layer is 0.5wt%, so the mass fraction of W in the obtained positive electrode material precursor is also 0.5wt%.

During the preparation process, Al only exists in the second doping layer, and the secondary particle of the precursor is regarded as a sphere, in which the radius of the first doping layer is $2.5\mu m$ (half of the particle size of $5\mu m$), and the radius of the secondary particle of the precursor is $3.75\mu m$ (half of the particle size of $7.5\mu m$). The relationship between the volume V1 of the first doping layer, the volume V2 of the second doping layer and the volume V of the entire secondary particle is as follows: V=V1+V2. According to the calculation formula of the volume of a sphere, the calculation method of the volume proportion V2/V of the second doping layer in the secondary particle is as follows:

$$V2/V=(V-V1)/V=(3.75^3-2.5^3)/3.75^3=70\%.$$

Since the mass proportion of Al in the second doping layer is 0.5wt%, the mass proportion of Al in the precursor material is 0.35wt%.

## Comparative Example 1

The present Comparative Example was different from Examples mainly in that the doping elements were not included, specifically as follows.

A lithium-ion battery ternary positive electrode material precursor was provided, a chemical formula being $Ni_{0.96}Co_{0.03}Mn_{0.01}(OH)_2$. Primary particles on a surface of the precursor material were strip-shaped and non-uniform in thickness. Secondary particles were spherical, and had sphericity of 91.3%, a median particle size D50 of 7.096 $\mu m$, a specific surface area of 12.63 $m^2/g$, and a tap density of 1.94 $g/cm^3$.

A preparation method for the lithium-ion battery ternary positive electrode material precursor of the present Comparative Example specifically included following steps:

(1) formulating an appropriate amount of 120 g/L nickel sulfate solution, 120 g/L cobalt sulfate solution, and 120 g/L manganese sulfate solution; and mixing and stirring uniformly the nickel sulfate solution, cobalt sulfate solution, manganese sulfate solution and pure water, to formulate a main metal salt solution according to a molar ratio of Ni: Co: Mn = 96:3:1, a sum of mass concentrations of nickel, cobalt, and manganese ions being 120 g/L;

(2) into a reaction kettle, adding pure water, a sodium hydroxide solution (with a mass percentage concentration of 32.5%), and an aqueous ammonia solution (with a mass percentage concentration of 20.5%), and introducing nitrogen as a protective gas, where a reaction temperature was 60 °C, a rotational speed of the reaction was 300 r/min, and conditions of a base solution were adjusted to pH 11.65 and an ammonia concentration of 3.5 g/L;

(3) feeding materials into the reaction kettle by pumping according to set flow rates, introducing the main metal salt solution (a flow rate was 2.0%/h of a volume of the reaction kettle), a doping element salt solution(s) (a flow rate was 1.0%/h of the volume of the reaction kettle), a sodium hydroxide solution (a flow rate was 0.78%/h of the volume of the reaction kettle) and aqueous ammonia (a flow rate was 0.032%/h of the volume of the reaction kettle), and performing a co-precipitation reaction, where a stirring rotational speed in a reaction process was adjusted to be 300 r/min, a pH value in the reaction process was controlled to be 11.00, and an ammonia concentration was 5.5 g/L; and

(4) further carrying out the reaction until obtaining particles with satisfactory D50, filtering and washing a precursor slurry, and drying, sieving, and demagnetizing a filter cake so as to render the precursor.

A surface SEM picture of the obtained precursor is as shown in FIG. 5.

## Comparative Example 2

The present Comparative Example was different from Examples mainly in that only the doping element W was included, specifically as follows.

A tungsten-doped lithium-ion battery ternary positive electrode material precursor was provided. In the precursor, W ions were uniformly distributed in a precursor material bulk; primary particles on a surface of the precursor material were short and fine and uniformly distributed, and secondary particles were spherical, and had sphericity of 94.5%, a median particle size D50 of 9.837 $\mu m$, a specific surface area of 18.68 $m^2/g$, and a tap density of 1.91 $g/cm^3$. Unlike Comparative Example 1, the present Comparative Example was added with W doping, according to theoretical calculations of the preparation method, a mass of W being 0.50% of a total mass of the precursor.

A preparation method for the tungsten-doped lithium-ion battery ternary positive electrode material precursor of the present Comparative Example specifically included following steps:

(1) formulating an appropriate amount of 120 g/L nickel sulfate solution, 120 g/L cobalt sulfate solution, 120 g/L manganese sulfate solution, and 1.91 g/L sodium tungstate solution; and mixing and stirring uniformly the nickel sulfate solution, cobalt sulfate solution, manganese sulfate solution and pure water, to formulate a main metal salt solution according to a molar ratio of Ni: Co: Mn = 96:3:1, a sum of mass concentrations of nickel, cobalt, and manganese ions being 120 g/L;
(2) into a reaction kettle, adding pure water, a sodium hydroxide solution (with a mass percentage concentration of 32.5%), and an aqueous ammonia solution (with a mass percentage concentration of 20.5%), and introducing nitrogen as a protective gas, where a reaction temperature was 60 °C, a rotational speed of the reaction was 300 r/min, and conditions of a base solution were adjusted to pH 11.85 and an ammonia concentration of 3.5 g/L;
(3) feeding materials into the reaction kettle by pumping according to set flow rates, introducing the main metal salt solution (a flow rate was 2.0%/h of a volume of the reaction kettle), a doping element salt solution(s) (a flow rate was 1.0%/h of the volume of the reaction kettle), a sodium hydroxide solution (a flow rate was 0.78%/h of the volume of the reaction kettle) and aqueous ammonia (a flow rate was 0.032%/h of the volume of the reaction kettle), and performing a co-precipitation reaction, where a stirring rotational speed in a reaction process was adjusted to be 300 r/min, a pH value in the reaction process was controlled to be 11.00, and an ammonia concentration was 5.5 g/L; and
(4) further carrying out the reaction until obtaining particles with satisfactory D50, filtering and washing a precursor slurry, and drying, sieving, and demagnetizing a filter cake so as to render the precursor.

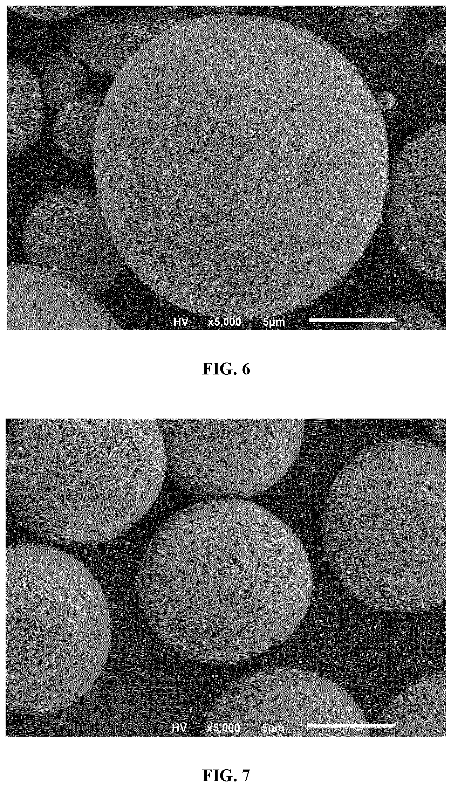

A surface SEM picture of the obtained precursor is as shown in FIG. 6.

**Comparative Example 3**

The present Comparative Example was different from Examples mainly in that W and Al were uniformly doped, specifically as follows:
A lithium-ion battery ternary positive electrode material precursor uniformly doped with W and Al was provided. In the precursor, W and Al ions were uniformly distributed in a precursor material bulk; primary particles on a surface of the precursor material were in a fine needle shape, and secondary particles were spherical, and had sphericity of 92.5%, a median particle size D50 of 14.045 $\mu$m, a specific surface area of 12.80 m$^2$/g, and a tap density of 1.90 g/cm$^3$. Unlike Comparative Example 1, W and Al were uniformly doped in the present Comparative Example, according to theoretical calculations of the preparation method, a mass of W being 0.50% of a total mass of the precursor, and a mass of Al being 0.35% of the total mass of the precursor.

A preparation method for the lithium-ion battery ternary positive electrode material precursor doped with tungsten and aluminum of the present Comparative Example specifically included following steps:

(1) formulating an appropriate amount of 120 g/L nickel sulfate solution, 120 g/L cobalt sulfate solution, 120 g/L manganese sulfate solution, 1.91 g/L sodium tungstate solution and 1.30 g/L sodium meta-aluminate solution; and mixing and stirring uniformly the nickel sulfate solution, cobalt sulfate solution, manganese sulfate solution and pure water, to formulate a main metal salt solution according to a molar ratio of Ni: Co: Mn = 96:3:1, a sum of mass concentrations of nickel, cobalt, and manganese ions being 120 g/L;
(2) into a reaction kettle, adding pure water, a sodium hydroxide solution (with a mass percentage concentration of 32.5%), and an aqueous ammonia solution (with a mass percentage concentration of 20.5%), and introducing nitrogen as a protective gas, where a reaction temperature was 60 °C, a rotational speed of the reaction was 300 r/min, and conditions of a base solution were adjusted to pH 11.65 and an ammonia concentration of 3.5 g/L;
(3) feeding materials into the reaction kettle by pumping according to set flow rates, introducing the main metal salt solution (a flow rate was 2.0%/h of a volume of the reaction kettle), a doping element salt solution(s) (a flow rate was 1.0%/h of the volume of the reaction kettle), a sodium hydroxide solution (a flow rate was 0.78%/h of the volume of the reaction kettle) and aqueous ammonia (a flow rate was 0.032%/h of the volume of the reaction kettle), and performing a co-precipitation reaction, where a stirring rotational speed in a reaction process was adjusted to be 300 r/min, a pH value in the reaction process was controlled to be 10.60, and an ammonia concentration was 5.5 g/L; and
(4) further carrying out the reaction until obtaining particles with satisfactory D50, filtering and washing a precursor slurry, and drying, sieving, and demagnetizing a filter cake so as to render the uniformly doped precursor.

**Comparative Example 4**

The present Comparative Example was different from Examples mainly in that W, Nb, Mo, Zr, Ti, and Al were uniformly doped, specifically as follows:

A lithium-ion battery ternary positive electrode material precursor uniformly doped with W, Nb, Mo, Zr, Ti, and Al was provided. In the precursor, W, Nb, Mo, Zr, Ti, and Al ions were uniformly distributed in a precursor material bulk; primary particles on a surface of the precursor material were in a fine needle shape, and secondary particles were spherical, and had sphericity of 93.6%, a median particle size D50 of 10.166 $\mu$m, a specific surface area of 9.27 m$^2$/g, and a tap density of 1.83 g/cm$^3$. Unlike Comparative Example 1, W, Nb, Mo, Zr, Ti, and Al were uniformly doped in the present Comparative Example, according to theoretical calculations of the preparation method, a mass of W being 0.50% of a total mass of the precursor, a mass of Nb being 0.49% of a total mass of the precursor, a mass of Mo being 0.49% of a total mass of the precursor, a mass of Zr being 0.47% of a total mass of the precursor, a mass of Ti being 0.47% of a total mass of the precursor, and a mass of Al being 0.35% of the total mass of the precursor.

A preparation method for the lithium-ion battery ternary positive electrode material precursor uniformly doped with six elements (i.e., uniform distribution of six doping elements) of the present Comparative Example specifically included following steps:

formulating an appropriate amount of 120 g/L nickel sulfate solution, 120 g/L cobalt sulfate solution, 120 g/L manganese sulfate solution, 1.91 g/L sodium tungstate solution, 1.82 g/L niobium oxalate solution, 1.82 g/L sodium molybdate solution, 1.75 g/L zirconium sulfate solution, 1.75 g/L titanyl sulfate solution and 1.30 g/L sodium meta-aluminate solution; and mixing and stirring uniformly the nickel sulfate solution, cobalt sulfate solution, manganese sulfate solution and pure water, to formulate a main metal salt solution according to a molar ratio of Ni: Co: Mn = 96:3:1, a sum of mass concentrations of nickel, cobalt, and manganese ions being 120 g/L;

into a reaction kettle, adding pure water, a sodium hydroxide solution (with a mass percentage concentration of 32.5%), and an aqueous ammonia solution (with a mass percentage concentration of 20.5%), and introducing nitrogen as a protective gas, where a reaction temperature was 60 °C, a rotational speed of the reaction was 300 r/min, and conditions of a base solution were adjusted to pH 11.65 and an ammonia concentration of 3.5 g/L;

feeding materials into the reaction kettle by pumping according to set flow rates, introducing the main metal salt solution (a flow rate was 2.0%/h of a volume of the reaction kettle), a doping element salt solution(s) (a flow rate was 1.0%/h of the volume of the reaction kettle), a sodium hydroxide solution (a flow rate was 0.78%/h of the volume of the reaction kettle) and aqueous ammonia (a flow rate was 0.032%/h of the volume of the reaction kettle), and performing a co-precipitation reaction, where a stirring rotational speed in a reaction process was adjusted to be 300 r/min, a pH value in the reaction process was controlled to be 11.00, and an ammonia concentration was 5.5 g/L; and

further carrying out the reaction until obtaining particles with satisfactory D50, filtering and washing a precursor slurry, and drying, sieving, and demagnetizing a filter cake so as to render the uniformly doped precursor.

A surface SEM picture of the obtained precursor is as shown in FIG. 7.

Comparative Example 5

The main difference between this comparative example and the examples is that the doping is divided into two layers, the first doping layer is doped with Al, and the second doping layer is doped with Al and W. According to the theoretical calculation of the preparation method, in the precursor, the mass of W accounts for 0.35% of the total mass of the precursor, and the mass of Al accounts for 0.50% of the total mass of the precursor.

The preparation method of the Al and W doped lithium ion battery ternary positive electrode material precursor in this comparative example is basically the same as the preparation method of Example 3, except that the type of doping element salt solution is increased according to the particle size control (0-5.0$\mu$m: 0.5wt% Al solution; 5.0-7.5$\mu$m (reaction termination): 0.5wt% W, 0.5wt% Al solution). The primary particles on the surface of the precursor material are arranged in fine needles, the secondary particle sphericity is preferably 91.9%, the specific surface area is 16.17m$^2$/g, and the tap density is 1.89g/cm$^3$.

Physicochemical data of the precursors obtained in Examples and Comparative Examples are as shown in TABLE 1 below.

TABLE 1 Physicochemical Data of Precursors of Various Examples and Comparative Examples

| No. | Comparison of doping manner | D50 /$\mu$m | Span | TD (g/cm$^3$) | BET (m$^2$/g) | Sphericity of secondary particle (%) |
|---|---|---|---|---|---|---|
| Example 1 | Four-layer multi-element gradient doping | 6.667 | 1.563 | 1.92 | 19.52 | 92.3 |

(continued)

| No. | Comparison of doping manner | D50 /μm | Span | TD (g/cm$^3$) | BET (m$^2$/g) | Sphericity of secondary particle (%) |
|---|---|---|---|---|---|---|
| Example 2 | Three-layer multi-element gradient doping | 6.829 | 1.612 | 1.95 | 18.70 | 92.1 |
| Example 3 | Two-layer multi-element gradient doping | 6.172 | 0.738 | 1.87 | 14.51 | 92.7 |
| Comparative Example 1 | No doping | 7.096 | 0.558 | 1.94 | 12.63 | 91.3 |
| Comparative Example 2 | Uniformly doping W | 9.837 | 1.403 | 1.91 | 18.68 | 91.5 |
| Comparative Example 3 | Uniformly doping W and Al | 14.045 | 0.262 | 1.90 | 12.80 | 92.5 |
| Comparative Example 4 | Uniformly doping six elements | 10.166 | 0.410 | 1.83 | 9.72 | 93.6 |
| Comparative Example 5 | Multi-element gradient doping in two layers, where the first layer is doped with Al, and the second layer is doped with Al and W | 6.454 | 0.812 | 1.89 | 16.17 | 91.9 |

Morphologies of the precursors obtained in Examples and Comparative Examples are as shown in TABLE 2 below.

TABLE 2 Morphologies of Precursors of Various Examples and Comparative Examples

| No. | Surface morphology |
|---|---|
| Example 1 | Primary particles on surface being in a flake shape and tightly stacked and distributed |
| Example 2 | Primary particles on surface being in a flake shape and tightly stacked and distributed |
| Example 3 | Primary particles on surface being in a fine needle shape and tightly stacked and distributed |
| Comparative Example 1 | Primary particles on surface being strip-shaped and not uniform in thickness |
| Comparative Example 2 | Primary particles on surface being short and fine and uniformly distributed |
| Comparative Example 3 | Primary particles on surface being in a fine needle shape |
| Comparative Example 4 | Primary particles on surface being in a fine needle shape |
| Comparative Example 5 | Primary particles on surface being in a fine needle shape |

Data of batteries prepared from the positive electrode materials obtained in Examples and Comparative Examples are as shown in TABLE 3 below.

TABLE 3 Electrochemical Data of Positive Electrode Materials Made from Precursors of Various Examples and Comparative Examples

| No. | 0.1 C charge capacity per gram (mA·h/g) | 0.1 C discharge capacity per gram (mA·h/g) | 0.1 C initial Coulombic efficiency (%) | 4 C discharge capacity per gram (mA·h/g) | Rate performance (discharge capacity ratio 4C/0.1C) | Capacity retention rate after 50 cycles (%) |
|---|---|---|---|---|---|---|
| Example 1 | 248.1 | 229.0 | 92.3 | 197.4 | 86.2% | 98.4 |
| Example 2 | 246.2 | 226.3 | 91.9 | 193.0 | 85.3% | 98.5 |

(continued)

| No. | 0.1 C charge capacity per gram (mA·h/g) | 0.1 C discharge capacity per gram (mA·h/g) | 0.1 C initial Coulombic efficiency (%) | 4 C discharge capacity per gram (mA·h/g) | Rate performance (discharge capacity ratio 4C/0.1C) | Capacity retention rate after 50 cycles (%) |
|---|---|---|---|---|---|---|
| Example 3 | 248.3 | 228.7 | 92.1 | 194.4 | 85.0% | 97.0 |
| Comparative Example 1 | 251.0 | 232.6 | 92.7 | 191.5 | 82.2% | 89.2 |
| Comparative Example 2 | 250.5 | 233.1 | 93.1 | 187.8 | 80.5% | 91.3 |
| Comparative Example 3 | 247.4 | 225.1 | 91.0 | 191.1 | 84.5% | 93.7 |
| Comparative Example 4 | 245.7 | 223.5 | 91.0 | 192.0 | 85.9% | 97.3 |
| Comparative Example 5 | 244.9 | 222.4 | 90.8 | 190.6 | 85.7% | 91.8 |

The positive electrode materials synthesized from the precursors obtained in the Examples and Comparative Examples were all polycrystalline, the secondary particles were all spherical-like, the primary particles were bulky, and the primary particles in Example 1 were relatively small (reference can be made to drawings for surface SEMs of the positive electrode materials).

Comparing Comparative Example 1 with the Examples, the precursor in Comparative Example 1 was not doped with any element, the sphericity was low, the primary particles were not uniform in thickness, and the positive electrode material made therefrom, as not being doped, had a high charge and discharge capacity per gram, with 0.1 C discharge capacity per gram being 232.6 mAh/g, but since $Ni^{2+}$ will enter $Li^+$ site during cycling of the high-nickel material, mixed arrangement of $Li^+/Ni^{2+}$ occurred, and in the case of mixed arrangement of $Li^+/Ni^{2+}$, mobility of $Li^+$ was hindered, and at the same time, H2→H3 phase transition of the material and repeated deintercalation and intercalation of lithium ions during charging and discharging caused lattice shrinkage and intergranular cracks, thus the cycle capacity retention rate and rate performance were obviously lower than those in Examples 1 and 2, and particularly the capacity retention rate after 50 cycles at 1 C was 89.2%, with a difference of 9.2% from Example 1.

Comparing Comparative Example 2 with the Examples, the precursor in Comparative Example 2 was uniformly doped with the element W, and the positive electrode material made therefrom had obviously lower rate performance and capacity retention rate after 50 cycles at 1 C than those in the Examples, because Comparative Example 2 was uniformly single-doped with the element W, $W^{6+}$ inhibited the irreversible phase transition, and compared with the TM-O bond, the W-O bond had larger dissociation energy, so that oxygen around W is stabilized, structural instability can be relieved, and the cycle stability and thermal stability can be improved to a certain extent, but the single-doping element W cannot completely eliminate the volume change during the charging and discharging cycles; therefore, after multiple cycles, the electrolytic solution still will erode the interior of the positive electrode material due to volume expansion, thus causing the cycle stability to be gradually reduced, and thus the capacity retention rate after 50 cycles at 1 C was lower than that in the Examples.

Comparing Comparative Example 3 with the Examples, the precursor in Comparative Example 3 was uniformly doped with elements W and Al, and for the positive electrode material made therefrom, as it was uniformly doped with more Al elements, the Ni-O bond length was reduced after Al doping, the bond energy was increased, so that the dissolution and diffusion of metal ions in the Li layer and the electrolytic solution were suppressed; however, after the Al doping was introduced, Li vacancies appeared, resulting in a decrease in the capacity; therefore, the charge and discharge capacity per gram were lower than that in the Examples. At the same time, the rate performance and capacity retention rate after 50 cycles at 1 C were still obviously lower than those in the Examples, because the doping of the two elements cannot produce a synergistic effect to reduce the volume change of the material, reduce the formation of cracks caused by lattice defects and local strain, and improve the thermal stability and chemical stability of the material.

Comparing Comparative Example 4 with Example 1, the precursor in Comparative Example 4 was uniformly doped with six elements W, Nb, Mo, Zr, Ti, and Al, and for the positive electrode material made therefrom, the rate performance and capacity retention rate after 50 cycles at 1 C were not as good as those in the Examples, because the Examples employed gradient doping, can sufficiently exert the synergistic effect of the high-entropy structure, enhance the stability of the material, reduce the volume change during charging and discharging cycles, so as to improve the rate performance and cycle stability. Moreover, since the doping amount in Comparative Example 4 was larger than that in Example 1, the capacity loss was larger, and thus the charge and discharge capacity per gram was obviously lower than that in the Examples.

Multi-element doping can enhance stability of the material, that is, by reducing the volume change of the material (the volume changes less as the doping element increases) during the charging and discharging, formation of cracks caused by lattice defects and local strain is reduced, so as to improve the thermal stability and chemical stability of the material. Thus, the capacity retention rates after 50 cycles at 1 C in the Examples were high, with the capacity retention rate in Example 1 reaching 98.4%. In addition, the multi-element doping can also improve the electrical conductivity and ion diffusion performance of the material, and improve the rate performance of the battery; therefore, the Examples had better rate performance.

Finally, it should be noted that various examples above are merely used for describing the technical solutions of the present application, rather than limiting the present application; while the detailed description is made to the present application with reference to various preceding examples, those ordinarily skilled in the art should understand that they still could modify the technical solutions described in the various preceding examples, or make equivalent substitutions to some or all of the technical features therein; and these modifications or substitutions do not make the essence of the corresponding technical solutions depart from the scope of the technical solutions of the various examples of the present application.

**Claims**

1. A multi-element doped positive electrode precursor, **characterized in that** the multi-element doped positive electrode precursor comprises N doped layers, which are a first doped layer to an $N^{th}$ doped layer respectively from inside to outside, a doping element W is doped in each doped layer, and a doping element Al is doped in the $N^{th}$ doped layer, N being a natural number greater than or equal to 2.

2. The multi-element doped positive electrode precursor according to claim 1, meeting one or more of the following conditions:

   (1) doping amounts of doping elements being each independently 1,000-15,000 ppm;
   (2) the doped layers each independently having a thickness of 0.5-4.0 $\mu$m; and
   (3) doping elements in the doped layers further comprising one or more of Mg, Ca, Sr, Ba, Y, La, V, Nb, Ta, Cr, Mo, Zn, B, Ga, Ge, Sn, Sb, Bi, Zr, and Ti.

3. The multi-element doped positive electrode precursor according to claim 1, **characterized in that** the doping amounts of doping elements being each independently 2000-10000 ppm, preferably 3000-7000 ppm, more preferably 4000-6000 ppm.

4. The multi-element doped positive electrode precursor according to any one of claims 1-3, **characterized in that** types of doping elements in the $N^{th}$ doped layer in the multi-element doped positive electrode precursor are more than types of doping elements in the other doped layers.

5. The multi-element doped positive electrode precursor according to claim 4, **characterized in that**, the types of the doping elements in the doped layers are increased sequentially from the inside to the outside.

6. The multi-element doped positive electrode precursor according to any one of claims 1-5, **characterized in that** the multi-element doped positive electrode precursor meets one or more of the following conditions:

   (1) the first doped layer only comprising the doping element W;
   (2) the doped layers comprising a second doped layer, and the second doped layer comprising one or more doping elements of Mg, Ca, Sr, Ba, Y, La, V, Nb, Ta, Cr, Mo, Zn, B, Ga, Ge, Sn, Sb, Bi, Zr, and Ti, N being a natural number greater than or equal to 3;
   (3) the doped layers comprising a third doped layer, and the third doped layer comprising at least two doping elements of Mg, Ca, Sr, Ba, Y, La, V, Nb, Ta, Cr, Mo, Zn, B, Ga, Ge, Sn, Sb, Bi, Zr, and Ti, N being a natural number greater than or equal to 4;
   (4) the $N^{th}$ doped layer comprising one or more doping elements of Mg, Ca, Sr, Ba, Y, La, V, Nb, Ta, Cr, Mo, Zn, B, Ga, Ge, Sn, Sb, Bi, Zr, and Ti
   (5) the doped layers at least comprising the first doped layer, a second doped layer, a third doped layer and a fourth doped layer, wherein the first doped layer only comprising the doping element W, the second doped layer comprising doping elements W, Nb, and Mo, the third doped layer comprising doping elements W, Nb, Mo, Zr, and Ti, and the fourth doped layer comprising doping elements W, Al, Nb, Mo, Zr, and Ti.

7. The multi-element doped positive electrode precursor according to claim 6, **characterized in that** the $N^{th}$ doped layer comprising all the doping elements comprised in the other doped layers.

8. The multi-element doped positive electrode precursor according to claim 6, **characterized in that**, a doping mass ratio of W, Nb, Mo, Zr, Ti, and Al in the fourth doped layer being (3-10): (2-9): (2-9): (1-8): (1-8): 1.

9. The multi-element doped positive electrode precursor according to any one of claims 1-8, meeting one or more of the following conditions:

A. a chemical formula of the multi-element doped positive electrode precursor being $Ni_xCo_yMn_zM_pA_m$, wherein $0.6 \leq x < 1$, $0 \leq y \leq 0.4$, $0 \leq z \leq 0.4$, $p \leq 0.05$, $x+y+z+p=1$, and $1 \leq m \leq 2$; A being at least one of OH, O, and $CO_3$, M comprising W and Al as necessary and one or more of Mg, Ca, Sr, Ba, Y, La, V, Nb, Ta, Cr, Mo, Zn, B, Ga, Ge, Sn, Sb, Bi, Zr, and Ti as optional;
B. the multi-element doped positive electrode precursor having a median particle size D50 ranging from 4 $\mu$m to 30 $\mu$m;
C. the multi-element doped positive electrode precursor having a specific surface area BET ranging from 2 $m^2$/g to 30 $m^2$/g;
D. the multi-element doped positive electrode precursor having a tap density TD ranging from 1.5 $g/cm^3$ to 3.0 $g/cm^3$;
E. the multi-element doped positive electrode precursor having sphericity ranging from 80% to 100%;
F. metal elements in the multi-element doped positive electrode precursor and average valence states thereof comprising: Ni positive divalent, Co positive divalent, Mn positive divalent, Al positive trivalent, Zr positive tetravalent, Ti positive tetravalent, Nb positive pentavalent, Mo positive hexavalent, and W positive hexavalent; and
G. a primary particle on a surface of the multi-element doped positive electrode precursor having a flake-shaped morphology.

10. A preparation method for the multi-element doped positive electrode precursor according to any one of claims 1-9, comprising:
adding a raw material comprising a metal salt solution, a precipitant and a complexing agent into a base solution, and performing a solution co-precipitation reaction so as to render the multi-element doped positive electrode precursor, wherein the metal salt solution comprises a main metal salt solution and a doping element salt solution.

11. The preparation method for the multi-element doped positive electrode precursor according to claim 10, **characterized in that** the preparation method meets one or more of the following conditions:

(1) the main metal salt solution comprising one or more of nickel salt, cobalt salt, and manganese salt, and a concentration of the main metal salt solution ranging from 110 g/L to 130 g/L; and/or the doping element salt solution comprising W and Al salt solutions and one or more of Mg, Ca, Sr, Ba, Y, La, V, Nb, Ta, Cr, Mo, Zn, B, Ga, Ge, Sn, Sb, Bi, Zr, and Ti salt solutions and/or alkaline salt solutions as optional; and/or, the precipitant comprising a sodium hydroxide aqueous solution and/or a sodium carbonate aqueous solution; and/or, the complexing agent comprising aqueous ammonia, sodium citrate and/or oxalic acid; and/or the base solution comprising the precipitant, the complexing agent and water;
(2) pH of the base solution ranging from 11.30 to 12.00, and/or an ammonia concentration of the base solution ranging from 3 g/L to 10 g/L;
(3) the solution co-precipitation reaction being carried out under a protective atmosphere;
(4) a temperature of the solution co-precipitation reaction ranging from 40 °C to 80 °C, and/or a stirring speed of the solution co-precipitation reaction ranging from 150 r/min to 1,000 r/min;
(5) pH of the solution co-precipitation reaction ranging from 10.60 to 11.30, and/or an ammonia concentration of the solution co-precipitation reaction ranging from 3 g/L and 10 g/L;
(6) a flow rate of the main metal salt solution ranging from 1.0%/h to 5.0%/h of a volume of a reaction vessel, and/or a flow rate of the doping element salt solution ranging from 0.5%/h to 2.5%/h of the volume of the reaction vessel; and/or a flow rate of the precipitant ranging from 0.3%/h to 2.0%/h of the volume of the reaction vessel; and/or a flow rate of the complexing agent ranging from 0.01%/h to 0.10%/h of the volume of the reaction vessel; and
(7) after the solution co-precipitation reaction being ended, the method further comprising washing and drying a solid.

12. A positive electrode material, **characterized in that** a raw material thereof comprises the multi-element doped positive electrode precursor according to any one of claims 1-9.

13. The positive electrode material according to claim 12, **characterized in that** the positive electrode material is obtained by sintering the raw material comprising the multi-element doped positive electrode precursor and a lithium source.

14. A battery, comprising the positive electrode material according to claim 13.

15. An electrical device, comprising the battery according to claim 14.

First layer (0-2.0μm) : 0.5wt% W

Second layer (2.0-3.0μm) : 0.5wt% W、 0.5wt% Nb、 0.5wt% Mo

Third layer (3.0-5.0μm) : 0.5wt% W、 0.5wt% Nb、 0.5wt% Mo、 0.5wt% Zr、 0.5wt% Ti

Fourth layer (5.0-7.5μm) : 0.5wt% W、 0.5wt% Nb、 0.5wt% Mo、 0.5wt% Zr、 0.5wt% Ti、 0.5wt% Al

**FIG. 1**

CNGR 1.0kV 3.6mm x10.0k LA40(U)　　　　　5.00μm

**FIG. 2**

**FIG. 3a**

**FIG. 3b**

**FIG. 4a**

**FIG. 4b**

**FIG. 5**

EP 4 647 401 A1

**FIG. 6**

**FIG. 7**

Europäisches
Patentamt

European
Patent Office

Office européen
des brevets

# EUROPEAN SEARCH REPORT

**Application Number**

EP 25 16 0456

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 113 036 119 B (JINCHI ENERGY MAT CO LTD; HUNAN CHANGYUAN LICO CO LTD) 31 May 2022 (2022-05-31) | 1-15 | INV. C01G53/05 C01G53/50 |
| Y | * figures; examples * | 1-15 | C01G53/506 C01G53/84 |
| X | CN 115 448 386 B (YIBIN LIBODE NEW MAT CO LTD) 28 February 2023 (2023-02-28) | 1-15 | H01M4/525 H01M4/36 |
| Y | * examples * | 1-15 | H01M4/505 H01M10/052 |
| Y | CN 114 314 694 B (HUNAN ZHONGVIAO NEW ENERGY SCIENCE AND TECH LIMITED COMPANY) 23 February 2024 (2024-02-23) * claims; examples * | 1-15 | |
| Y | JP 7 404886 B2 (TOYOTA IND CORP) 26 December 2023 (2023-12-26) * examples * | 1-15 | |

**TECHNICAL FIELDS SEARCHED (IPC)**

C01G
H01M

The present search report has been drawn up for all claims

| Place of search | Date of completion of the search | Examiner |
|---|---|---|
| Munich | 31 July 2025 | Marucci, Alessandra |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 16 0456

This annex lists the patent family members relating to the patent documents cited in the above-mentioned European search report.
The members are as contained in the European Patent Office EDP file on
The European Patent Office is in no way liable for these particulars which are merely given for the purpose of information.

31-07-2025

| Patent document cited in search report | | Publication date | Patent family member(s) | | Publication date |
|---|---|---|---|---|---|
| CN 113036119 | B | 31-05-2022 | NONE | | |
| CN 115448386 | B | 28-02-2023 | NONE | | |
| CN 114314694 | B | 23-02-2024 | NONE | | |
| JP 7404886 | B2 | 26-12-2023 | JP | 7404886 B2 | 26-12-2023 |
| | | | JP | 2020155404 A | 24-09-2020 |

EPO FORM P0459

For more details about this annex : see Official Journal of the European Patent Office, No. 12/82